# EUROPEAN PATENT APPLICATION

(11) **EP 4 725 617 A1**
(43) Date of publication of application: **15.04.2026**
(21) Application number: 24940512.7
(22) Date of filing: 04.12.2024
(51) Int. Cl.: B05C 1/08

(54) **DOT-COATING PATTERNED ROLLER, SEPARATOR AND ADHESIVE-COATING DEVICE**

(30) Priority: 06.05.2024 CN 202410550129
(71) Applicant: HEBEI GELLEC NEW ENERGY SCIENCE & TECHNOLOGGY CO., LTD, Handan, Hebei 057150 (CN)
(72) Inventor: YUAN, Haichao, Handan, Hebei 057150 (CN); XU, Feng, Handan, Hebei 057150 (CN); ZHAO, Yuanxiang, Handan, Hebei 057150 (CN); XING, Peng, Handan, Hebei 057150 (CN); SU, Bihai, Handan, Hebei 057150 (CN); YANG, Zhentu, Handan, Hebei 057150 (CN)
(74) Representative: Viering, Jentschura & Partner mbB Patent- und Rechtsanwälte
(86) International application number: PCT/CN2024/136663
(87) International publication number: WO 2025/232172

(57) **Abstract**

The disclosure provides a dot matrix coating plate roller, a separator and a coating device. The dot matrix coating plate roller comprises: a cylindrical cavity, where a plurality of protrusions are formed on the surface of the cylindrical cavity, wherein the protrusions are arranged in a hexagon form with each protrusion located at each of the vertexes of the hexagon, so that the lines of all the hexagons on the surface of the cylindrical cavity can form an arc-shaped honeycomb structure. A regular hexagon is bent along the surface of the cylindrical cavity to an arc-shaped hexagon which is the hexagon. The separator comprises: a base film, where a plurality of coating points are formed on the surface of the base film, wherein the coating points are arranged in a hexagon form, with the coating points located at the vertexes of the hexagon, so that the lines between adjacent coating points can form a honeycomb structure on the surface of the base film. The protrusions of the dot matrix coating plate roller in this disclosure are distributed in a hexagon form, whereby the coating points on the separator after being coated are distributed in a hexagon form. The coating points in this disclosure are uniform in size and regular in shape compared to spraying coating.

## Description

### TECHNICAL FIELD

The disclosure belongs to the technical field of battery, and more specifically, it involves a dot matrix coating plate roller, a separator and a coating device.

### BACKGROUND

Lithium-ion batteries are characterized by high voltage, high specific energy, and high cycle efficiency, and are widely used in various fields of production and life. As an indispensable part of the battery, the separator plays an important role in the safety and electrical performance of the battery.

At present, polyolefin-based microporous membranes dominate LIBs (lithium-ion batteries) separators due to their advantages, such as stable chemical and electrochemical properties and high mechanical strength. However, the inherent low melting point and anisotropy of polyolefin materials make them susceptible to melting and shrinkage at high temperatures, causing short circuit and irreversible damage to batteries. Moreover, in the process of battery manufacturing, there are still problems such as the electrode sheets and the separators fit poorly and the battery cells are soft. A most effective solution to solve these problems is to provide a functional coating with adhesiveness property on the separator to adhere the positive and negative electrodes to the separator to enhance the hardness of battery cells and thus improve the safety and electrochemical performance of batteries. However, the coating in prior art has high coverage and a large coating volume, which often results in higher internal resistance and lower electrochemical performance of the battery. Therefore, there is a need to control the coverage rate of the coating reasonably so that the separator with the coating has both high adhesion and excellent electrochemical properties.

A coating method for battery separator is disclosed in the invention patent publication No. CN107876313A, in which slurry is sprayed on the surface of the separator by a spraying equipment and the separator is dried after the excess slurry is scraped flat by a scraping equipment. Compared with the traditional method which coats with a gravure roller, this method decreases coating volume, but the sizes of coating points formed by this method are nonuniform and the consistency of the adhesion of electrode sheets after being hot-pressed is poor. A new coating device is provided in the utility model patent No. CN204307779D. A plurality of ribs, each extending along the axial direction, are spaced apart on the outer circumferential surface of the coating roller of the coating device. The coating roller is driven to rotate when the separator moves, thereby forming spaced strip glue layers on the separator. Even though the coating of the strip glue layers is more uniform, the coating volume is also very large. A spraying separator is provided in patent publication No. CN113363672A, which includes a base film, an inorganic coating applied on one side of the base film and organic particulate punctiform coatings sprayed on the side of the inorganic coating and the side of the base film. The sprayed points are approximately circular with a coating volume of glue of a single layer of 0.7 g/m2, which is still very large, and the adhesive strength is < 1.2N/m, which is very small. Furthermore, the arrangement of the coating points is irregular. Therefore, the prior art failed to solve the problems of poor adhesion and uneven glue coating of battery separator.

### SUMMARY

In view of the shortcomings of the prior art, the purpose of this disclosure is to provide a dot matrix coating plate roller.

Another purpose of this disclosure is to provide a separator.

Another purpose of this disclosure is to provide a coating device.

Another purpose of this disclosure is to provide a method for coating separator, the method can realize uniform coating point size on the surface of the separator, array arrangement of the coating points, small coating volume, controllable coverage rate of the coating and high adhesion features without affecting the electrochemical performance of the separator, thereby improving the safety of the separator.

The objects of the invention are achieved by the following technical schemes.

A dot matrix coating plate roller, comprising:
a cylindrical cavity, where a plurality of protrusions are formed on the surface of the cylindrical cavity, wherein the protrusions are arranged in a hexagon form with each protrusion located at each of the vertexes of the hexagon, so that the lines of all the hexagons on the surface of the cylindrical cavity form an arc-shaped honeycomb structure, wherein a regular hexagon is bent along the surface of the cylindrical cavity to an arc-shaped hexagon which is the hexagon.

In the technical scheme above, wherein the same protrusion is located on the interconnected vertex of three hexagons which are connected at the vertex.

In the technical scheme above, the length of the side of the regular hexagon is 850~1000 µm.

In the technical scheme above, the diameter of each of the protrusions is 300~450µm.

In the technical scheme above, the distance between the dot matrix coating plate roller and the separator to be coated is adjustable.

A separator, comprising: a base film, where a plurality of coating points are formed on the surface of the base film, wherein the coating points are arranged in a hexagon form with the coating points located at each of the vertexes of the hexagon, so that the lines between adjacent coating points can form a honeycomb structure on the surface of the base film, wherein the coverage rate of the coating points on the surface of the base film is between 5~10% by area fraction.

In the technical scheme of the separator above, wherein the same coating point is located on the interconnected vertex of three hexagons which are connected at the vertex.

In the technical scheme of the separator above, the hexagon is regular hexagon.

A coating device, comprising the dot matrix coating plate roller.

A method for coating separator, comprising: coating with the coating device.

The beneficial effects of the present invention compared to the prior art are:
1. The protrusions of the dot matrix coating plate roller in this disclosure are hexagonally arranged so that the coating points coated on the separator are more evenly arranged. And the sizes of the coating points in this disclosure are uniform and the shapes of the coating points are regular compared to spraying coating.
2. The use of the dot matrix coating plate roller in this disclosure can significantly reduce the coating volume compared to the roller coating or the spraying coating process, which in turn reduces production costs. The coverage rate can be kept under 10%, and the coating volume on one side can be kept to be less than 0.3g/m², which avoids the problem of increased air permeability after the base film is coated with glue and reduces the internal resistance of the battery.
3. The separator obtained using the dot matrix coating plate roller of the present disclosure has a high adhesive strength of the hot-pressed positive electrode sheet and higher viscosity consistency with a lower coating volume and coverage rate.
4. The coating device of the present disclosure allows for the adjustable coverage rate of the coating points on the surface of the base film.

### BRIEF DESCRIPTION OF THE DRAWINGS

FIG. 1 shows a schematic diagram of the protrusions of the dot matrix coating plate roller in Embodiment 1.
FIG. 2 shows a schematic diagram of the protrusions of the dot matrix coating plate roller in Comparison 1.
FIG. 3 shows a schematic diagram of the protrusions of the dot matrix coating plate roller in Comparison 2.
FIG. 4 shows a schematic diagram of the protrusions of the dot matrix coating plate roller in Comparison 3.
FIG. 5 shows a schematic diagram of the protrusions of the dot matrix coating plate roller in Comparison 4.
FIG. 6 shows a schematic diagram of the coating device.
FIG. 7 shows a scanning electron micrograph of the coating points of the separator prepared in Embodiment 4.
FIG. 8 shows a microscope image of the coating points of the separator prepared in Comparison 3.
FIG. 9 shows two test curves of the adhesive force of the separator prepared in Embodiment 4 and the separator prepared in Comparison 6.
FIG. 10 shows an electron micrograph of the coating point of the separator prepared in Comparison 6.

Wherein, 1, slurry tank; 2, dot matrix coating plate roller; 3, base film; 4, scraper.

### DETAILED DESCRIPTION OF THE EMBODIMENTS

The technical scheme of the present disclosure will be further explained in conjunction with specific embodiments below.

Information on the ingredients involved in the following embodiments is as follows:
Organic polymer: chosen from one or more of polyvinylidene fluoride, polyvinylidene fluoride-hexafluoropropylene copolymer, Polyvinylidene fluoride-trifluoroethylene copolymer;
Dispersant: chosen from cationic ammonium salts or quaternary ammonium salts;
Thickener: chosen from one or more of carboxymethyl cellulose and hydroxyethyl cellulose;
Binder: chosen from one or more of polyvinyl alcohol, polyvinyl butyral, acrylic acid or styrene-butadiene rubber;
The instruments and the model information thereof involved in the following embodiments are as follows:
   Hot press: presses that can heat up to 80°C and can reach a pressure of 1000 Kg, not limited to the specific model;
   Electronic tensile testing machine: the stretching force value can be stably recorded during the stretching process, and the effective stretching distance is≥25mm, not limited to the specific model of the equipment.

The base film used is a microporous film prepared from at least one of the following: polyethylene, polypropylene, polyethylene terephthalate, polypropylene terephthalate, polybutylene terephthalate, polyimide, polyetherimide, polysulfone, polyethersulfone, polyamide, polyphenylene ether and polyphenylene sulfide.

In the following embodiments, the base film is a PE base film with a thickness of 9 µm. It should be noted that the base film with other thicknesses may also be used. Poly(vinylidene fluoride-hexafluoropropylene) is chosen as the organic polymer with a melting point of 148-155°C and a melt index of 3-8. Dispersant is chosen as poly-acrylate waterborne polymers with a density of 1.06 kg/m³. The binder is chosen as a water-based adhesive with a viscosity of 7300-9300 mPa·s and a solid content of 15%. The thickener is sodium carboxymethylcellulose, which is a light-yellow powder with a viscosity of 400-800 cP (tested at 2% dissolved in water at 25°C).

In the following embodiments, all of the slurries to be coated are PVDF slurries. A method for preparing the PVDF slurry includes: weighing 0.18 kg of the dispersant and adding it into 19 L of pure water; stirring for 10 minutes until it is uniformly dispersed; adding 5.2 kg of polyvinylidene fluoride-hexafluoropropylene copolymer (powder); stirring for 1h in vacuum environment until it is uniformly dispersed; adding 9.8 kg of the thickener and 2.1 kg of the binder in sequence, stirring for 10 minutes until they are uniformly dispersed; sand grinding for 5 minutes to obtain uniform PVDF slurry, which has a viscosity of about 300 mPa·s, solid content of about 17%, particle size D50 of about 6.0 µm.

In the following embodiments, the method for preparing the separator is: coating on one or two surfaces of the base film with the coating device, which forms a plurality of coating points on the surfaces of the base film; drying the base film in an oven at 60°C to obtain the separator; wherein the coating speed is 120 m/min.

Coverage rate: the percentage of the sum of the areas of all coating points in the test area relative to the area of the test area at any size, which is measured by a Keyence microscope.

Adhesive strength of the hot-pressed positive electrode sheet: cutting tout a separator with a size of 25mm*150mm, a positive electrode sheet with a size of 25mm*150mm; regulating the hot-press to a temperature of 80°C and a pressure of 100 MPa; preheating the separator and the positive electrode sheet for 1s, and then hot-pressing the separator and the positive electrode sheet for 1s; testing the adhesive strength of the hot-pressed positive electrode sheet with an electronic tensile tester, wherein the separator and the positive electrode sheet are peeled off until the stretching distance of the electronic tensile tester is 50 mm, with the speed of the electronic tensile tester of 300 mm/min, and the peeling degree of 180°. The adhesive strength of the hot-pressed positive electrode sheet is equal to the peeling force divided by the stretching distance of the electronic tensile tester. The peeling force is the average value of the force collected by the electronic tensile tester during the process of peeling off the separator and the positive electrode sheet. The adhesive strength of the hot-pressed positive electrode sheet is calculated based on the data within a stretching distance between 10 and 40 mm, that is, the adhesive strength of the hot-pressed positive electrode sheet is equal to the peeling force for a stretching distance between 10 and 40 mm divided by 30 mm.

In the following embodiments, the diameter of the cylindrical cavity is 128 mm.

In the following embodiments, the distance is the distance between the center points of two objects.

### Embodiment 1 to 4

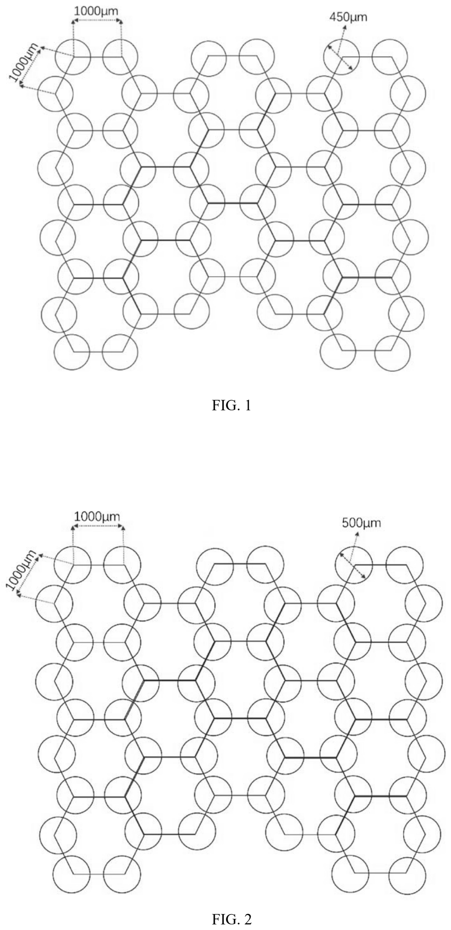

A dot matrix coating plate roller comprises a cylindrical cavity, where a plurality of protrusions are formed on the surface of the cylindrical cavity. As shown in Fig. 1, the protrusions are arranged in a hexagon form with each protrusion located at each of the vertexes of the hexagon, so that the lines of all the hexagons on the surface of the cylindrical cavity form an arc- shaped honeycomb structure, wherein a regular hexagon is bent along the surface of the cylindrical cavity to an arc-shaped hexagon which is the hexagon. The same protrusion is located on the interconnected vertex of three hexagons which are connected at the vertex. The length of the side of the regular hexagon is 1000 µm, and the diameter of each of the protrusions is 450µm.

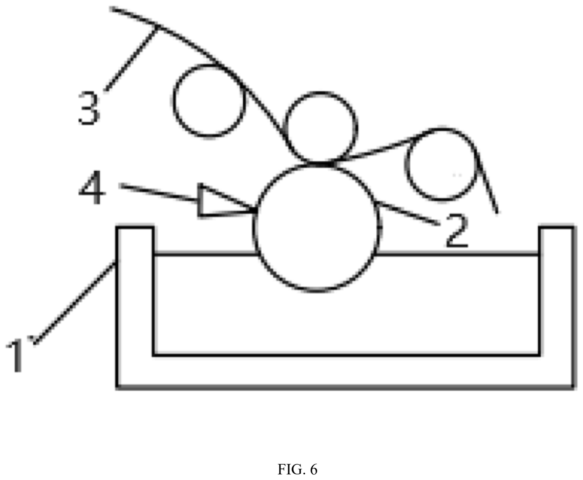

A coating device is shown in FIG. 6. The coating device includes a slurry tank 1 and the dot matrix coating plate roller 2. The base film passes through intermediate roller and back roller. The slurry tank is provided therein with the PVDF slurry. The dot matrix coating plate roller is located under the base film 3 and is used to coat the base film that is passing through the back roller. A scraper 4 is provided on one side of the dot matrix coating plate roller 2 to remove excess PVDF slurry. The dot matrix coating plate roller is mounted on a slide rail through a slider block, whereby the position of the dot matrix coating plate roller 2 on the slide rail can be adjusted to adjust the size of the gap between the base film and the dot matrix coating plate roller, and thus the coverage rate (the smaller the gap between the base film and the dot matrix coating plate roller, the greater the coverage rate).

One side coating on the base film with the coating device above to obtain the separator. The separator includes: a base film, where a plurality of coating points are formed on the surface of the separator, wherein the coating points are arranged in a hexagon form., The hexagon is a regular hexagon. The coating points are located at each of the vertices of the hexagon, so that the lines between adjacent coating points can form a honeycomb structure on the surface of the base film. The same coating point is located on the interconnected vertex of three hexagons.

The coverage rate is set to 5.2%, 7.1%, 8.4% and 9.8%, respectively, by adjusting the size of the gap between the base film and the dot matrix coating plate roller.

**Table 1**

| Embodiments | Thickness of the coating points (µm) | Coating volume (g/m²) | Coverage rate (%) | Diameter of the coating points (µm) |
|---|---|---|---|---|
| Embodiment 1 | 4.10 | 0.11 | 5.2 | 327 |
| Embodiment 2 | 4.12 | 0.16 | 7.1 | 285 |
| Embodiment 3 | 4.14 | 0.23 | 8.4 | 400 |
| Embodiment 4 | 4.17 | 0.29 | 9.8 | 459 |

Table 1 is the coating data of separators prepared in Embodiments 1 to 4. It can be seen from Table 1 that as the coverage rate increases, the thicknesses of coating points tend to increase slightly, and the diameters of the coating points tend to become larger. As the distance between the roller and the film surface decreases, the diameters of the coating points tend to increase, thereby the coating volume also increases.

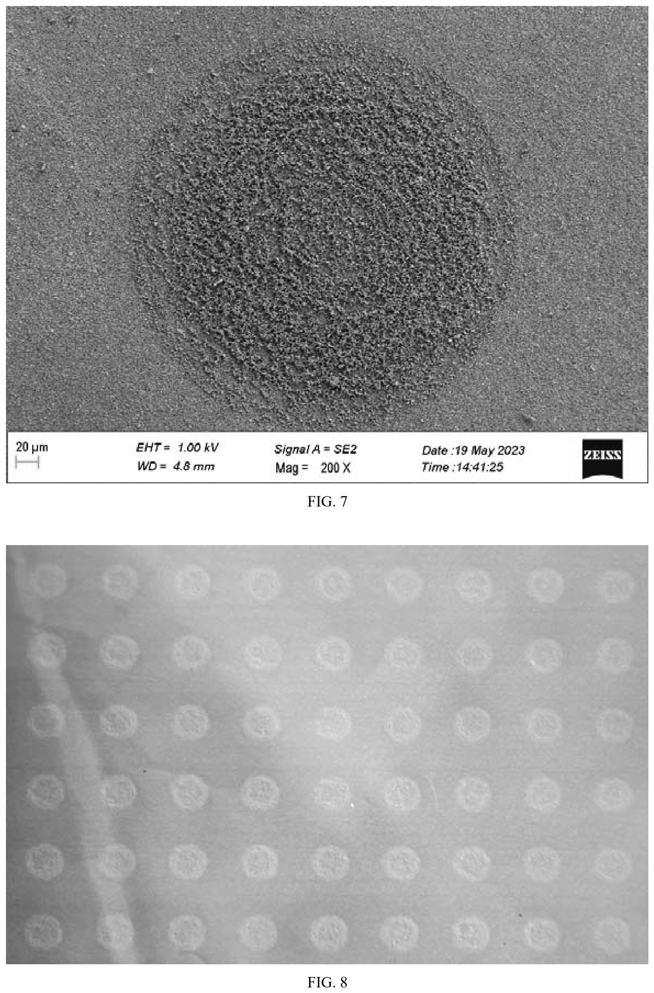

A scanning electron micrograph of the coating point of the separator prepared in Embodiment 4 is shown in FIG. 7. It can be seen that the coating point is circular and it is regular in shape.

### Embodiment 5

Both sides of the base film are coated with the coating device which is the same as that used in Embodiment 1 (the dot matrix coating plate roller is the same as well) to obtain the separator (one side is coated first, then the other side).

### Comparison 1

A coating device, which is basically the same as the coating device in Embodiment 1, has the only difference that the diameter of the protrusions on the dot matrix coating plate roller in Comparison 1 is 500µm (as shown in FIG. 2).

The base film is coated on one side with the coating device in Comparison 1 to obtain the separator.

### Comparison 2

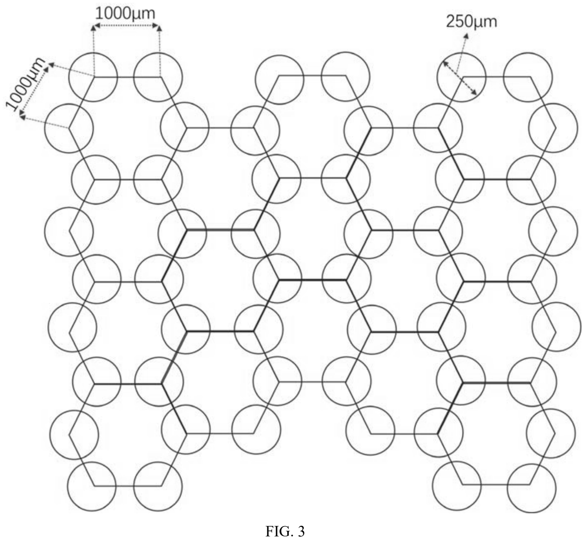

A coating device, which is basically the same as the coating device in Embodiment 1, has the only difference that the diameter of the protrusions on the dot matrix coating plate roller in Comparison 2 is 250µm (as shown in FIG. 3).

The base film is coated on one side with the coating device in Comparison 2 to obtain the separator.

### Comparison 3

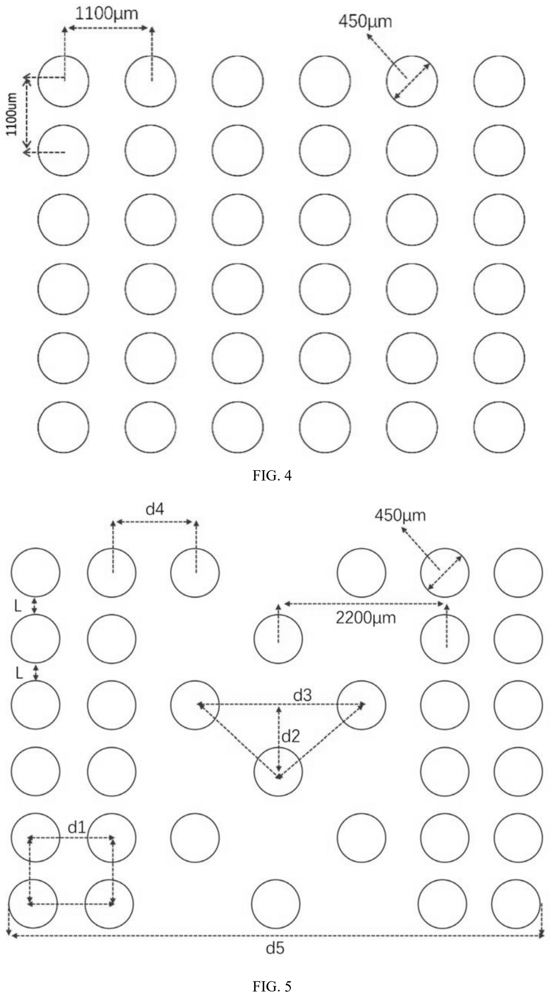

A dot matrix coating plate roller includes a cylindrical cavity, where a plurality of protrusions are formed on the surface of the cylindrical cavity. As shown in FIG. 4, the protrusions are arranged in a quadrilateral form (matrix arrangement) with each protrusion located at each of the vertices of the quadrilateral. A regular quadrilateral is bent along the surface of the cylindrical cavity to an arc-shaped quadrilateral. The distance between the centers of any two adjacent protrusions arranged on the surface of the cylindrical cavity along the circumferential direction is 1100 µm. The distance between any two adjacent protrusions arranged on the cylindrical cavity along the axial direction is 1100 µm.

As shown in FIG. 6, a coating device, which is basically the same as the coating device in Embodiment 1, has the only difference that the dot matrix coating plate roller in Comparison 3 is used.

The base film is coated on one side with the coating device in Comparison 3 to obtain the separator. A microscope image of the coating points of the separator prepared in Comparison 3 is shown in FIG. 8. It can be observed that all of the coating points are circular, with uniform size, regular shape, and even arrangement.

### Comparison 4

A dot matrix coating plate roller includes a cylindrical cavity, where a plurality of protrusions are formed on the surface of the cylindrical cavity. As shown in FIG. 5, the protrusions are arranged in a complex structure, each of which comprises a quadrilateral structure and a triangular structure (the quadrilateral structure and the triangular structure do not overlap). Each vertex of the quadrilateral structure and the triangular structure is provided with a protrusion with a diameter of 450 µm. Two quadrilateral structures are arranged symmetrically with respect to and on opposite sides of each triangular structure. A regular quadrilateral is bent along the surface of the cylindrical cavity to an arc-shaped quadrilateral structure. The length of the side of the regular quadrilateral is d1 µm. An isosceles triangle is bent along the surface of the cylindrical cavity to an arc-shaped triangular structure. The height of the isosceles triangle is d2 µm, and the length of the base of the isosceles triangle is d3 µm. The protrusions in one layer of the quadrilateral structure are on the same line along the axial direction of the cylindrical cavity as the protrusions located on the bottom edge of the triangular structure. The protrusions transversely arranged in another layer of the quadrilateral structure are on the same line as the protrusion located at the vertex of the triangular structure. The distance d5 between the distal edges of the quadrilateral structures on two sides of each triangular structure along the axial direction of the cylindrical cavity is 7050µm. The length L along the circumferential surface of the cylindrical cavity between the facing edges of two adjacent protrusions of the adjacent complex structures is 200µm. The distance between adjacent protrusions of the quadrilateral structure and the triangular structure in a complex structure is d4. Wherein, d1 and d2 are both 1100µm, d3 is 2200µm, and d4 is 1100µm.

As shown in FIG. 6, a coating device, which is basically the same as the coating device in Embodiment 1, has the only difference that the dot matrix coating plate roller in Comparison 4 is used.

The base film is coated on one side with the coating device in Comparison 4 to obtain the separator.

### Comparison 5

A separator is obtained by means of coating the base film on one side with a conventional roller coating process (using a coating machine of Shenzhen Xinjiatuo Automation Technology Co., Ltd.).

### Comparison 6

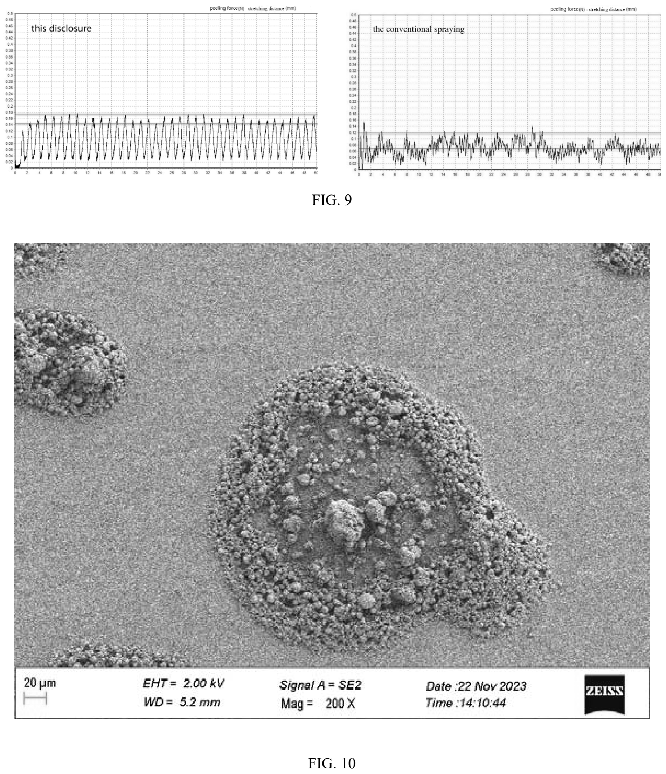

A separator is obtained by means of coating the base film on one side with a conventional spraying coating process (using a coating machine of Shenzhen Xinjiatuo Automation Technology Co., Ltd.). The electron micrograph of the coating points of the separator is shown in FIG. 10, wherein the spraying points are irregular and distributed disorderly.

Table 2 shows the comparative data of the separators prepared in Embodiments 1 to 5 and the separators prepared in Comparisons 1 to 6 (the coverage rate in Comparison 5 in the table is 100%, which means the entire surface is coated).

**Table 2**

| Embodiments and Comparisons | Thickn ess of the coating points (µm) | Increment of air permeability (s/100ml) | Coating volume (g/m²) | Coverage rate (%) | Adhesive strength of the hot-pressed positive electrode sheet (N/m) | Internal resistance (Ω) |
|---|---|---|---|---|---|---|
| Embodiment 1 | 4.10 | 7 | 0.11 | 5.9 | 9.7 | 0.317 |
| Embodiment 2 | 4.12 | 9 | 0.16 | 7.1 | 10.5 | 0.321 |
| Embodiment 3 | 4.14 | 10 | 0.23 | 8.4 | 10.9 | 0.364 |
| Embodiment 4 | 4.17 | 10 | 0.29 | 9.8 | 11.5 | 0.375 |
| Embodiment 5 | 7.6 | 17 | 0.51 | 9.5 | 13.0 | 0.402 |
| Comparison 1 | 4.28 | 25 | 0.34 | 17.2 | 9.2 | 0.408 |
| Comparison 2 | 3.78 | 9 | 0.15 | 4.5 | 3.9 | 0.301 |
| Comparison 3 | 4.18 | 15 | 0.41 | 15.1 | 6.5 | 0.382 |
| Comparison 4 | 4.23 | 13 | 0.38 | 10.8 | 6.2 | 0.389 |
| Comparison 5 | 4.8 | 29 | 1.05 | 100 | 9.3 | 0.684 |
| Comparison 6 | 3.8 | 19 | 0.56 | 20 | 9.4 | 0.441 |

The coverage rate of the separator prepared in Comparison 1 is significantly increased, thereby the coating volume increases, and the cost raises; the coverage rate of the separator prepared in Comparison 2 is significantly decreased, thereby the coating volume decreases, but the adhesive strength of the hot-pressed positive electrode sheet is also significantly decreased; the coverage rate of the separator prepared in Comparison 3 is significantly increased, thereby the coating volume increases, and the cost will raise. The coverage rate of the separator prepared in Comparison 4 is similar to that of Embodiments 4 to 5, but is still greater than that of the Embodiments, and the coating volume is greater than that of Embodiment 4, the production cost increases. The separator prepared in Comparison 5 (coated by a conventional gravure roller) has a larger coating volume, a higher increment of air permeability, and a larger internal resistance in the battery; FIG. 9 shows test curves of the adhesive force of the separator prepared in Embodiment 4 and the separator prepared in Comparison 6. The horizontal axis of FIG. 9 represents the stretching distance, and the vertical axis represents the peeling force (the force is collected by the electronic tensile tester during the process of peeling off the separator and the positive electrode). The adhesive strength of the hot-pressed positive electrode sheet of the separator prepared in Embodiment 6 (prepared by conventional spraying process) is not much different from that of the Embodiments, but the coating volume and coverage rate are much greater than those of the Embodiments. And as can be seen from FIG. 9, the separator prepared in Embodiment 4 (the film of the present disclosure in FIG. 9) shows regular up and down fluctuations in the test curve of adhesive force, and the fluctuation range is basically similar with little difference in the curve thresholds, indicating that the coating points are regularly distributed, and the adhesive force between the separator prepared in Embodiment 4 and the positive electrode sheet is relatively uniform. Whereas the separator prepared in Comparison 6 (the conventional spraying coated film in FIG. 9) during the test process shows a large fluctuation range and irregular fluctuations in the test curve of adhesive force, indicating that the adhesive force between the separator prepared in Comparison 6 and the positive electrode sheet is uneven. From the comparison of data in Table 1 and Table 2, it is found that the coating device using the dot matrix coating plate roller of the present invention can effectively control the coverage rate, reduce the coating volume, meanwhile ensure the adhesive property between the separator and the electrode sheet (adhesive strength of hot-pressed positive electrode sheet).

The present disclosure is described above by way of example. It should be noted that any simple variation, modification or other equivalent replacement that can be made by those skilled in the art without inventive effort without departing from the core of the present invention, falls within the protection scope of the present invention.

## Claims

1. A dot matrix coating plate roller, comprising:
a cylindrical cavity, where a plurality of protrusions are formed on the surface of the cylindrical cavity, wherein the protrusions are arranged in a hexagon form with each protrusion located at each of the vertexes of the hexagon, so that the lines of all the hexagons on the surface of the cylindrical cavity form an arc-shaped honeycomb structure, wherein a regular hexagon is bent along the surface of the cylindrical cavity to an arc-shaped hexagon which is the hexagon.

2. The dot matrix coating plate roller according to claim 1, wherein the same protrusion is located on the interconnected vertex of three hexagons which are connected at the vertex.

3. The dot matrix coating plate roller according to claim 1, wherein the length of the side of the regular hexagon is 850~1000 µm.

4. The dot matrix coating roller according to claim 1, wherein the diameter of each of the protrusions is 300~450 µm.

5. The dot matrix coating plate roller according to claim 1, wherein the distance between the dot matrix coating plate roller and the separator to be coated is adjustable.

6. A separator, comprising: a base film, where a plurality of coating points are formed on the surface of the separator, wherein the coating points are arranged in a hexagon form with the coating points located at each of the vertexes of the hexagon, so that the lines between adjacent coating points can form a honeycomb structure on the surface of the base film, wherein the coverage rate of the coating points on the surface of the base film is between 5~10% by area fraction.

7. The separator according to claim 6, wherein the same coating point is located on the interconnected vertex of three hexagons which are connected at the vertex.

8. The separator according to claim 6, wherein the hexagon is a regular hexagon.

9. A coating device, comprising the dot matrix coating plate roller according to any one of claims 1 to 5.

10. A method for coating separator, comprising: coating with the coating device according to claim 9.
